Europäisches Patentamt

European Patent Office

Office européen des brevets

(19)

(11) Veröffentlichungsnummer: **0 151 238**
A2

(12) **EUROPÄISCHE PATENTANMELDUNG**

(21) Anmeldenummer: **84113541.1**

(22) Anmeldetag: **09.11.84**

(51) Int. Cl.⁴: **B 29 D 23/22**

(30) Priorität: **13.12.83 DE 3344996**

(43) Veröffentlichungstag der Anmeldung:
**14.08.85 Patentblatt 85/33**

(84) Benannte Vertragsstaaten:
**DE FR GB IT SE**

(71) Anmelder: **Messerschmitt-Bölkow-Blohm Gesellschaft
mit beschränkter Haftung
Robert-Koch-Strasse
D-8012 Ottobrunn(DE)**

(72) Erfinder: **Prochaska, Wolfgang
Effnerstrasse 91
D-8000 München 81(DE)**

(72) Erfinder: **Schulz, Ralf-Thilo
Ödenstockacherstrasse 3
D-8011 Putzbrunn(DE)**

(72) Erfinder: **Wackerle, Peter-Martin
Oderweg 7
D-8012 Ottobrunn(DE)**

(54) Anlage zur Herstellung rohrförmiger Bauteile aus faserverstärktem Kunststoff.

(57) Bei einer Anlage zur automatischen Herstellung rohrförmiger Bauteile aus faserverstärktem Kunststoff, mit einer Einrichtung, mit der Faserstränge mit einem wärmehärtbaren Bindemittel getränkt werden, mit mindestens einem in eine Wickelmaschine einspannbaren Wickelsorn, auf den die getränkten Faserstränge abgelegt werden, wobei die Wickelmaschine eine parallel zu dem Dorn hin- und herbewegliche Führungseinrichtung für den aufzuwickelnden Faserstrang aufweist, eine Transporteinrichtung, mit der die gewickelten Bauteile durch einen Härteofen zu einer Einrichtung zum Herausziehen der Wickeldorne aus den gehärteten Bauteilen und zu wenigstens einer Nachbearbeitungsstation befördert werden, und mit der die leeren Wickeldorne wieder über eine transportable Dornvorbereitungsstation zur Wickelstation zurücktransportiert werden, ist die Nachbearbeitungsstation (62) zwischen dem Härteofen (35) und der Dornausziehinrichtung (66) vorgesehen. Dadurch können rohrförmige Bauteile (13) beliebiger Wickelstruktur hergestellt werden.

./...

FIG. 1

*MBB*

Patentabteilung

Die Erfindung bezieht sich auf eine Anlage zur Herstellung rohrförmiger Bauteile aus faserverstärktem Kunststoff mit einer Einrichtung, mit der Faserstränge mit einem wärmehärtbaren Bindemittel getränkt werden, mit mindestens einem in eine Wickelmaschine einspannbaren Wickeldorn, auf den die getränkten Faserstränge abgelegt werden, wobei die Wickelmaschine eine parallel zu dem Dorn hin- und herbewegliche Führungseinrichtung für den aufzuwickelnden Faserstrang aufweist, und eine Transporteinrichtung, mit der die gewickelten Bauteile durch einen Härteofen, zu einer Einrichtung zum Herausziehen der Wickeldorne aus den gehärteten Bauteilen und zu wenigstens einer Nachbearbeitungsstation befördert werden und mit der die leeren Wickeldorne wieder über eine Dornvorbereitungsstation zur Wikkelstation zurücktransportiert werden.

Eine derartige automatische Anlage ist bereits bekannt (Modern Plastics Encyclopedia, 1982-1983, S. 363). Da der Dorn aus dem gehärteten Bauteil unmittelbar nach Verlassen des Ofens herausgezogenwird, lassen sich mit der bekannten Anlage jedoch nur Bauteile mit einer ganz bestimmten Wickelstruktur herstellen, nämlich mit einer Wickelstruktur, die einen konstanten Innendurchmesser aufweist. Eine Nachbearbeitung des Bauteils ist bei der bekannten Anlage nach dem Herausziehen des Dorns vorgesehen.

Aus der DE-OS 25 24 853 ist es bekannt, das Wickeln von Lichtmasten aus faserverstärktem Kunststoff dadurch zu beschleunigen, daß eine Wickelmaschine mit mehreren parallel zueinander angeordneten Wickeldornen verwendet wird.

Aus der GB-PS 1 478 231 geht eine Anlage zur Herstellung rohrförmiger Bauteile hervor, die weitgehend automatisiert ist. Dabei werden mit einem Bindemittel getränkte Filz-

*MBB*

Patentabteilung

bahnabschnitte einem Wickeldorn zugeführt, der erwärmt ist, um die Innenseite des Bauteils während des Wickelvorganges auszuhärten. Nach Beendigung des Wickelns halten mehrere um das Bauteil angeordnete Anpreßwalzen das Bauteil in Position, während der Wickeldorn aus dem Bauteil gezogen wird. Durch die ausgehärtete Innenseite hält das Bauteil seine Form vorläufig bei und wird dann einem Ofen zum völligen Aushärten sowie Nachbearbeitungseinrichtungen zugeführt. Der Transport durch den Ofen, der mehrere Etagen aufweist, erfolgt dabei durch sich in Förderrichtung wellenförmig auf- und abbewegende Querbalken, so daß die Bauteile gleichzeitig rotieren. Dabei fallen die Bauteile von einer Etage auf die andere herab. Mit der bekannten Anlage sind jedoch keine Bauteile aus gewickelten Fassersträngen herstellbar.

Der Erfindung, wie sie in den Ansprüchen gekennzeichnet ist, liegt die Aufgabe zugrunde, eine automatische Anlage hoher Leistung zur Herstellung rohrförmiger Bauteile beliebiger Wickelstruktur zu schaffen.

Nachstehend ist die Erfindung anhand der beigefügten Zeichnung beispielsweise erläutert. Darin zeigen jeweils schematisch:

Figur 1    eine Draufsicht auf eine Ausführungsform der erfindungsgemäßen Anlage;

Figur 2    eine Seitenansicht eines Teils der an der Wikkelmaschine angeordneten Einrichtung zur Übergabe der gewickelten Bauteile von der Wickelmaschine an die Einrichtung zum Transport der Bauteile durch den Ofen;

Figur 3      eine Seitenansicht eines Teils der Übergabeeinrichtung nach Figur 2, jedoch in Position an
der Einrichtung zum Transport der Bauteile
durch den Ofen;

Figur 4      eine Seitenansicht eines Teils der Transportkette der Einrichtung zum Transport der Bauteile durch den Ofen in vergrößerter Wiedergabe;

Figur 5      einen Schnitt durch zwei sich gegenüberliegende Abschnitte der beiden Transportketten der
Einrichtung zum Transport der Bauteile durch
den Ofen in vergrößerter Wiedergabe;

Figur 6      eine Seitenansicht des Ofens mit der Einrichtung zum Transport der Bauteile durch den Ofen;

Figur 7      eine Seitenansicht eines Teils des Hubbalkenförderers, der der Einrichtung zum Transport
der Bauteile durch den Ofen nachgeordnet ist;

Figur 8      ein Bauteil das keinen konstanten Durchmesser
aufweist, nach dem Aushärten in der Nachbearbeitungsstation;

Figuren
9A undB      einen Taktplan der Anlage.

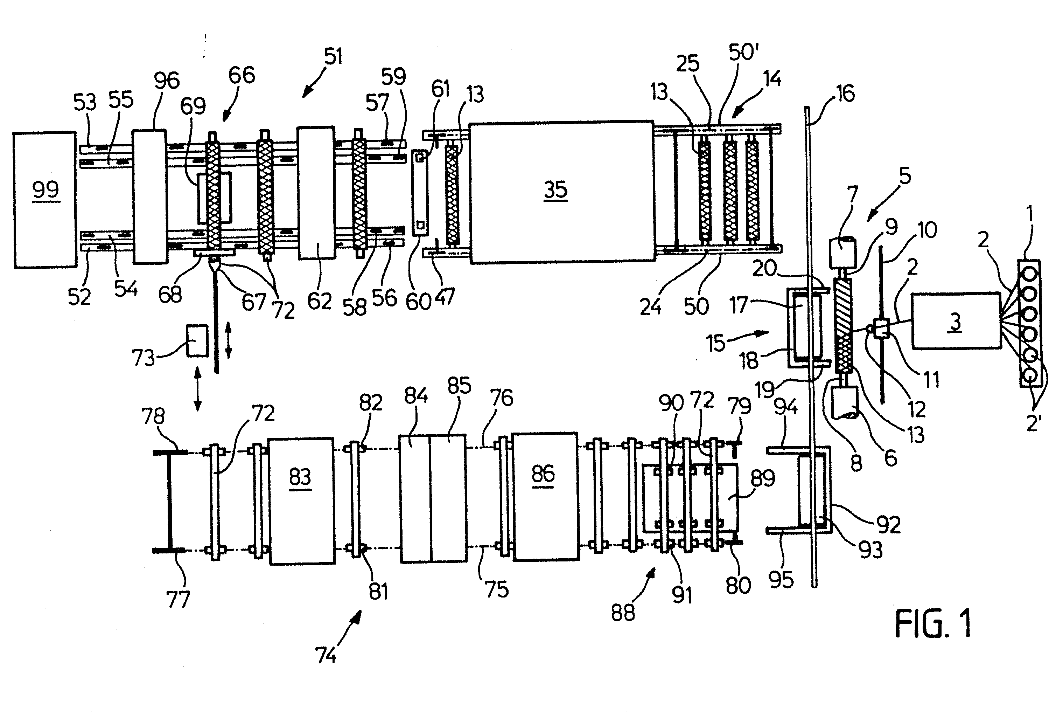

Gemäß Figur 1 weist die Anlage ein Gestell 1 auf, auf dem die Faserstrangvorratsspulen 2' angeordnet sind. Von den Vorratsspulen 2' laufen die Faserstränge 2, beispielsweise Glasfaserstränge, zu einer Tränkeinrichtung 3, in der sie mit einem wärmehärtbaren Bindemittel getränkt werden. Die getränkten Faserstränge 2 werden dann der Wickelmaschine 5 zugeführt.

Die Wickelmaschine 5 ist zum gleichzeitigen Wickeln von drei Bauteilen 13, 13' und 13" ausgebildet. Sie weist dazu ein Gestell mit Teilen 6 und 7 auf, in denen für jeden Wickeldorn jeweils eine Arbeitsspindel 8 und eine axial verschiebbare Spannspindel 9 drehbar gelagert sind. Zwischen je einem Arbeits/Spann-Spindelpaar 8 und 9 ist ein Wickeldorn 2 einspannbar. Die Drehachsen der Arbeits/Spann-Spindelpaare 8 und 9 verlaufen horizontal und parallel zueinander. Jeder eingespannte Wickeldorn ist dabei drehfest mit der zugehörigen Arbeitsspindel 8 verbunden, vorzugsweise über eine Hirtverzahnung, während an jeder Spannspindel 9 eine (nicht dargestellte) Zentrierspitze vorgesehen ist, die in eine entsprechende kegelige Zentrierbohrung an dem Ende des betreffenden Wickeldorns eingreift.

Zur Führung der auf die Wickeldorne aufzuwickelnden Faserstränge 2 ist an der Vorderseite der Wickelmaschine 5 eine zu den Wickeldornen parallel verlaufende Schiene 10 angeordnet, auf der ein Schlitten 11 hin- und herbeweglich ist , der je Wickeldorn ein Fadenauge 12 trägt.

Bei einer bestimmten Drehzahl der in der Wickelmaschine 5 eingespannten Wickeldorne läßt sich so durch die Geschwindigkeit der Hin- und Herbewegung des Schlittens 11 der Wickelwinkel der Faserstränge gegenüber der Längsachse des Bauteils 13 einstellen.

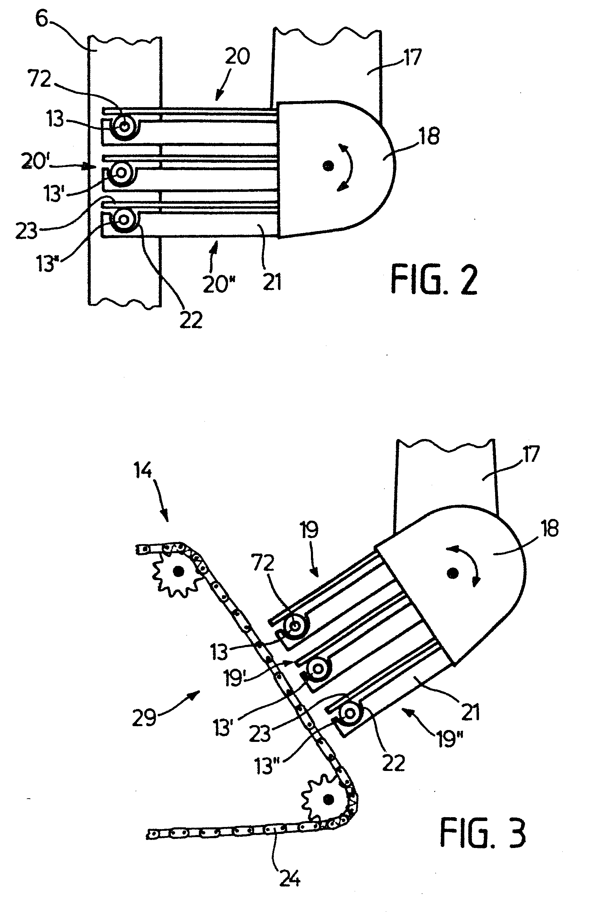

Die gewickelten Bauteile 13, 13', 13" werden anschließend zusammen mit dem Wickeldorn einer Einrichtung 14 zugeführt, mit der sie zum Aushärten des Harzes durch einen Ofen 35 transportiert werden. Die Übergabeeinrichtung 15 , mit der die Bauteile 13, 13', 13" von der Wickelmaschine 5 der Ofentransporteinrichtung 14 zugeführt werden, ist außer in Figur 1 in Figur 2 und 3 teilweise dargestellt. Sie weist einen an der Decke oder einem Gestell befestigten, horizontal verlaufenden Laufkatzenträger 16 auf, der sich von der Rückseite der Wickelmaschine 5 vor die Ofentransporteinrichtung 14 erstreckt. An der an dem Laufkatzenträger 16 verfahrbaren Laufkatze 17 ist an beiden Seiten ein Gestell 18 um eine horizontale, zur Längsrichtung des Trägers 16 bzw. zur Bauteildrehachse der Wickelmaschine 5 parallele Achse drehbar angeordnet.

An dem Gestell 18 sind für die, im vorliegenden Fall drei , gleichzeitig an der Wickelmaschine 5 eingespannten Bauteile 13, 13' und 13" jeweils zwei im Abstand voneinander angeordnete Greifeinrichtungen 19, 19' und 19"sowie 20, 20' und 20" angeordnet. Jede Greifeinrichtung 19, 19', 19" sowie 20, 20' und 20" besteht aus einer Schiene 21 mit einer Ausnehmung 22 an der Oberseite, welche Ausnehmung 22 das betreffende Bauteil 13, 13' bzw. 13" untergreift, sowie einem in Längsachse jeder Schiene 21 verschieblich geführten Riegel 23, der über das in der Ausnehmung 22 der Schiene 21 angeordnete Bauteil 13, 13' bzw. 13" schiebbar ist. Auf diese Weise kann jedes Bauteil 13, 13' und 13" von je zwei Greifeinrichtungen 19, 19' bzw. 19" und 20, 20' bzw. 20" umgriffen werden.

Nach dem Lösen der Bauteile 13, 13' und 13" durch Axialverschiebung der zugehörigen Spannspindel 9 werden die von den Greifeinrichtungen 19, 19' und 19" sowie 20, 20' und 20" umgriffenen Bauteile 13, 13' und 13" aus der Wickelmaschine 5 durch entsprechende Drehung des Gestells 18 aus der in Figur 2 gezeigten Position herausgeschwenkt und mittels der Laufkatze 17 vor die Ofentransporteinrichtung 14 gefahren, wo sie von den Greifeinrichtungen 19, 19' und 19" sowie 20, 20' und 20" in die in Figur 3 dargestellte Position verschwenkt und dann an die Ofentransporteinrichtung 14 abgegeben werden, wie nachstehend näher erläutert.

Die Ofentransporteinrichtung 14 wird durch einen zweisträngigen Kettenförderer gebildet, der schrittweise angetrieben wird. Jede der beiden Transportketten 24 und 25 des Kettenförderers ist dabei an den sich gegenüberliegenden Innenseiten mit Aufnahmen 26 und 27 für die Endabschnitte der Bauteile 13 versehen. Das heißt, der Abstand einander gegenüberliegender Aufnahmen 26 und 27 ist geringfügig größer als die Länge der Wickeldorne bzw. Bauteile 13.

Die zur Aufnahme eines Wickeldorns einander gegenüberliegenden Aufnahmen 26 und 27 sind jeweils in einer horizontalen Ebene angeordnet. Der Abstand der Aufnahmen 26 und 27 in Förderrichtung entspricht dabei dem Weg, um den sich die Transportketten 24 und 25 je Schritt vorwärtsbewegen.

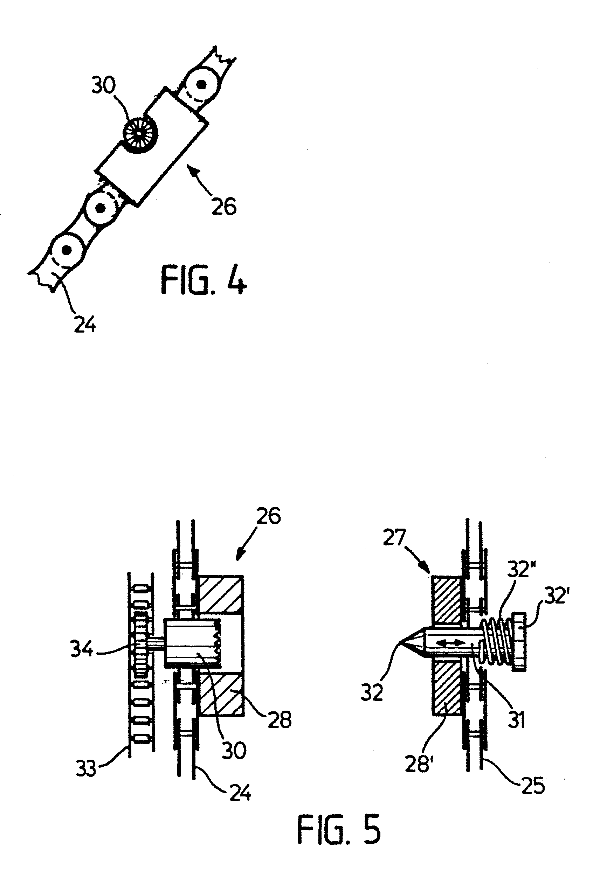

Wie Figur 4 und 5 zu entnehmen, kann jede Aufnahme 26 und 27 einen an den Innenseiten der Transportketten 24 und 25 befestigten Klotz 28 bzw. 28' umfassen, der eine nach oben offene Ausnehmung aufweist.

In die Ausnehmungen der Aufnahmen 26 und 27 rollen dann nach dem Entriegeln durch Zurückfahren der Riegel 23 die Bauteile 13, 13' und 13" aus den Ausnehmungen der Greifeinrichtungen 19, 19' und 19" und 20, 20' und 20". Zu diesem Zweck verläuft der Kettenförderer an diesem Abschnitt 29 schräg von unten nach oben von der Wickelmaschine 5 weg, während die Schienen 21 der Greiforgane 19, und 20 eine zu dem schrägen Abschnitt 29 senkrechte Position einnehmen.

Damit kein Bindemittel während des Transports der Bauteile 13 in den Ofen abtropfen kann, weist die Ofentransporteinrichtung 14 eine Einrichtung auf, mit der die Bauteile 13 in Umdrehung versetzt werden (Figuren 4 und 5).

Diese Einrichtung besteht aus einer Antriebsspindel 30 und einer axial verschiebbaren Spannspindel 31, die jeweils an einander gegenüberliegenden Aufnahmen 26 und 27 der beiden Transportketten 24 und 25 angeordnet und in der betreffenden Transportkette 24 bzw. 25 und der Klötze 28 bis 28' gelagert sind.

Die Wickeldorne der in den Aufnahmen 26 und 27 mit den Greiforganen 19, 19' und 19" sowie 20, 20' und 20" abgelegten Bauteile 13, 13' und 13" lassen sich so drehfest mit der Antriebsspindel 30 verbinden, und zwar wiederum bevorzugt über eine Hirtverzahnung, wobei die Spannspindel 31 mit ihrer Zentrierspitze 32 in die erwähnte kegelige Zentrierbohrung an diesem Ende des betreffenden Wickeldorns eingreift. Dadurch wird ein Gleiten der Bauteile 13 in den Aufnahmen 26 und 27 und damit ein Auftreten von Gleitflächen an der Außenumfangsfläche an den Enden der Bauteile 13 verhindert.

Die Spannspindel 31 weist an dem von der Zentrierspitze 32 abgewandten Ende, das aus der Kette 35 ragt, einen Kopf 32' auf. Weiterhin ist eine Zugfeder 32" vorgesehen, die am Kopf 32' und an der Kette befestigt ist. Dadurch ist die Spannspindel 31 auf die Antriebsspindel 30 zu federbelastet. Damit an der Stelle, an der die Bauteile 13, 13' und 13" von den Greifeinrichtungen 19, 19' und 19" freigegeben werden, die Bauteile 13, 13' und 13" in die Ausnehmungen' der Aufnahmen 26 und 27 bzw. Klötze 28 und 28' rollen können, muß die Spannspindel 31 aus der Ausnehmung gezogen werden. Dazu ist an dieser Stelle der Ofentransporteinrichtung eine nicht dargestellte, pneumatisch betätigbare Einrichtung vorgesehen, die am Kopf 32' angreift und die Spannspindel entgegen der Kraft der Feder 32" in den Klotz 28' hineinzieht.

Die Antriebsspindeln 30 werden von einer der Transportkette 24 benachbarten Rollenkette 33 angetrieben, und zwar jeweils über ein mit der Antriebsspindel 30 drehfest verbundenes koaxiales Ritzel (Figur 5).

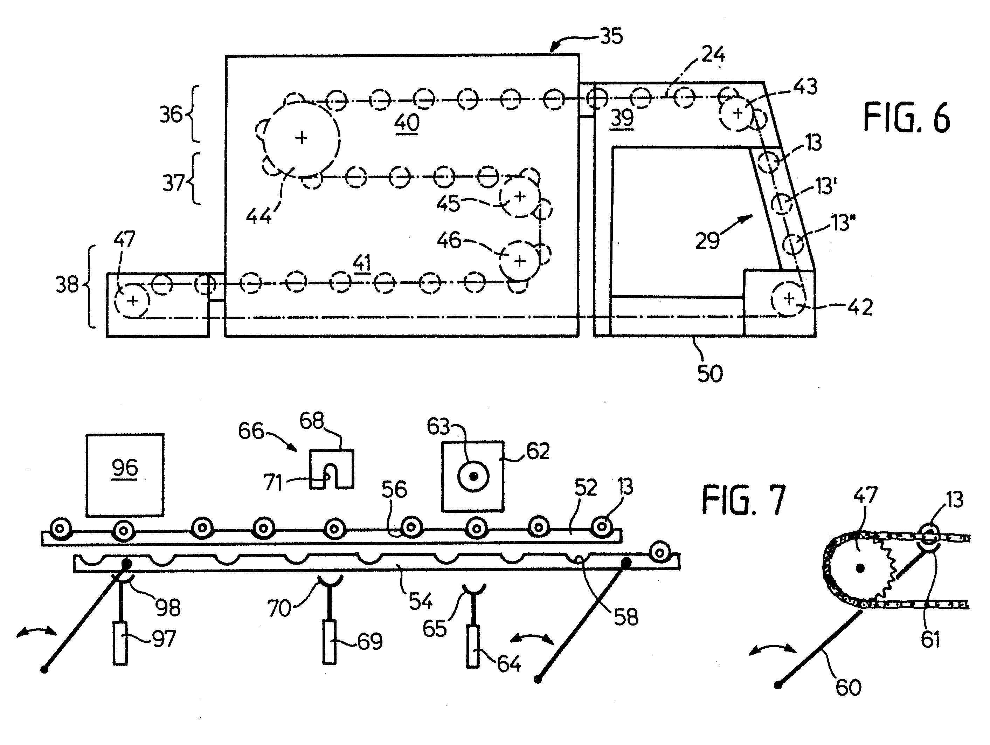

An dem schrägen Abschnitt 29 des Kettenförderers werden die Bauteile 13 nach oben in Höhe der obersten Etage 36 des drei Etagen 36, 37 und 38 umfassenden Ofens 35 transportiert, mit dem das Bindemittel ausgehärtet wird (Figur 6).

In der obersten Etage 36 ist dabei die Vorerwärmungszone 39 vorgesehen. Die Haupterwärmungszone 40 umfaßt die oberste Etage 36 und die mittlere Etage 37 und schließt sich der Vorerwärmungszone 39 an. In der untersten Etage 38 befindet sich die Kühlzone 41.

In der Vorerwärmungszone 39, die beispielsweise einen IR-Strahler aufweist, werden die Bauteile schnell aufgeheizt. Die Haupterwärmungszone 40 ist als Umluftofen ausgebildet. Damit keine Lösungsmitteldämpfe austreten können, ist an den Ofen 35 eine nicht dargestellte Absaugeinrichtung angeschlossen, mit der ein leichter Überdruck im Ofen 35 erzeugt wird.

Damit die Verweilzeit in der Haupterwärmungszone 40 möglichst groß ist, und aus Platzersparnis die Kühlzone 41 unter der Haupterwärmungszone 40 angeordnet werden kann, ist in dem Ofen 35 eine S-förmige Streckenführung des Kettenförderers vorgesehen, wobei sich , wie in Figur 6 dargestellt, die zwischen den Antriebsspindeln 30 und Spannspindeln 31 mit ihren Wickeldornen eingespannten , Bauteile 13 zweimal durch fast die volle Länge der Haupterwärmungszone 40 bewegen.

Dazu werden die Transportketten 24 und 25 nacheinander durch folgende Umlenkradpaare umgelenkt, nämlich ein erstes Umlenkradpaar 42 am vorderen Ende des schrägen Abschnitts 29, also in Höhe der untersten Etage 38, ein zweites Umlenkradpaar 43 am oberen Ende des schrägen Abschnitts 29, also in Höhe der obersten Etage 36 vor der Vorerwärmungszone 39 schräg über dem ersten Umlenkradpaar 42, ein drittes Umlenkradpaar 44 in der obersten Etage 36 im hinteren Bereich der Haupterwärmungszone 40, ein viertes Umlenkradpaar 45 in der mittleren Etage im vorderen Bereich der Haupterwärmungszone 40, ein fünftes Umlenkradpaar 46 in der Kühlzone 41 unterhalb des vierten Umlenkradpaares 45 sowie ein sechstes Umlenkradpaar 47 , das außerhalb des Ofens 35 in Höhe der untersten Etage 38 angeordnet ist.

Die Umlenkräder wenigstens eines Umlenkradpaares 42 bis 47 sind dabei drehfest miteinander verbunden, beispielsweise durch eine Welle, wobei die Drehachsen der Umlenkradpaare 42 bis 47 horizontal und parallel zueinander verlaufen.

Damit die Anlage der Länge der herzustellenden Bauteile 13 angepaßt werden kann, sind die Umlenkräder der Umlenkradpaare 42 bis 47 gegenüber einander verschieblich. Dazu können die beispielsweise von der Transportkette 24 umschlungenen Umlaufräder der Umlaufradpaare 42 bis 47 in einem Gestell 50 gelagert sein, das gegenüber dem Gestell 50', in dem die von der anderen Transportkette 25 umschlungenen Umlaufräder der Umlaufradpaare 42 bis 47 gelagert sind, verschiebbar ist (Figur 1).

An die Ofentransporteinrichtung 14 bzw. den Kettenförderer schließt sich ein Hubbalkenförderer 51 an. Der Hubbalkenförderer 51 weist zwei außen liegende stationäre Balken 52 und 53 sowie zwei innen liegende Hubbalken 54 und 55 auf. Die stationären Balken 52 und 53 sowie die Hubbalken 54 und 55 sind dabei mit Aufnahmen 56 und 57 bzw. 58 und 59 für die Bauteile auf ihrer Oberseite versehen.

Der Abstand der Aufnahmen 56 und 57 der stationären Balken 52 und 53 sowie der Abstand der Aufnahmen 58 und 59 der Hubbalken 54 und 55 entspricht dabei dem Weg, um den sich die Hubbalken 54 und 55 je Takt vorwärts bewegen. Der Transport der Bauteile 13 durch den Hubbalkenförderer 51 erfolgt also dadurch, daß die in den Aufnahmen 56 und 57 der stationären Balken 52 und 53 liegenden Bauteile 13 von den Hubbalken 54 und 55 mit deren Aufnahmen 58 und 59 untergriffen und , in den Aufnahmen 58 und 59 der Hubbalken 54 und 55 liegend, angehoben und in die nächsten Aufnahmen 56 und 57 der stationären Balken 52 und 53 abgelegt werden.

An dem dem Hubbalkenförderer 51 benachbarten Ende ist eine nicht dargestellte pneumatisch betätigbare Einrichtung vorgesehen, mit der die Spannspindeln 31 (Figur 5) zurückgezogen werden, so daß die Bauteile 13 lose in den Aufnahmen 26 und 27 der Transportketten 24 und 25 zu liegen kommen.

Die Übergabe der Bauteile 13 von der Ofentransporteinrichtung bzw. dem Kettenförderer 14 erfolgt durch eine Wippe 60 mit Aufnahmen 61. Die Wippe 60 untergreift dabei mit ihren Aufnahmen 61 das am Ende des Kettenförderers befindliche Bauteil 13, hebt es aus den entsprechenden Aufnahmen 26 und 27 heraus und legt , nach dem sie entsprechend verschwenkt worden ist, das Bauteil 13 in die benachbarten Aufnahmen 56 und 57 der stationären Balken 52 und 53 des Hubbalkenförderers 51.

Die Wippe 60 kann durch einen Kontakt, eine Fotozelle oder dergleichen betätigt werden, der bzw. die wirksam wird, wenn sich ein Bauteil 13 der Stelle des Kettenförderers nähert, an dem die Wippe 60 am Bauteil 13 angreift.

Die Bauteile 13 werden mit dem Hubbalkenförderer 51 zu einer Schleifeinrichtung 62 bewegt. Mit der Schleifeinrichtung 62 wird die Umfangsfläche der Bauteile 13 geschliffen, gegebenenfalls nur bestimmte Umfangsflächenabschnitte, beispielsweise die Endabschnitte der Bauteile 13, um darauf irgendwelche Anschlußteile aufstecken zu können.

Die Schleifeinrichtung 62 weist dazu eine Einrichtung zum Einspannen der Wickeldorne der Bauteile 13 auf sowie eine Schleifscheibe 63, die zu dem so eingespannten Bauteil 13 hin sowie quer zum Hubbalkenförderer 51 entlang dem Bauteil 13 beweglich ist.

Die Schleifeinrichtung 62 ist oberhalb des Hubbalkenförderers 51 angeordnet. Den Transport der Bauteile 13 von den Aufnahmen 56 und 57 der stationären Balken 52 und 53 zu der Schleifeinrichtung 62 übernimmt dabei ein Hubtisch 64 (Figuren 1 und 7), der Aufnahmen 65 für das betreffende Bauteil 13 aufweist und zwischen den Hubbalken 54 und 55 angeordnet ist.

Die nächste Station am Hubbalkenförderer 51 nach der
Schleifeinrichtung 62 stellt die Einrichtung 66 dar, mit
der die Wickeldorne aus den Bauteilen 13 herausgezogen werden.

Die Wickeldorn-Auszieheinrichtung 66 umfaßt eine Greifeinrichtung 67 und einen Anschlag 68. Sie ist oberhalb
des Hubbalkenförderers 51 angeordnet. An der Wickeldorn-
Auszieheinrichtung 66 ist ein Hubtisch 69 mit Aufnahmen 70
angeordnet, der in gleicher Weise ausgebildet ist wie der
der Schleifeinrichtung 62 zugeordnete, vorstehend näher erläuterte Hubtisch 64.

Der Anschlag 68 besteht aus einer Platte mit einer nach
unten offenen, schlitzförmigen Ausnehmung 71. Die Ausnehmung 71 weist eine Breite auf, die nur geringfügig
größer ist als der Außendurchmesser des Wickeldorn 72.
Weiterhin ist der Anschlag 68 gegenüber dem Hubbalkenförderer 51 bzw. dem Hubtisch 64 so angeordnet, daß der Hubtisch 64 das Bauteil 13 mit dem einen Ende des Wickeldorns
72 in die schlitzförmige Ausnehmung 71 des Anschlags 68
schiebt. Die Wickeldorne 72 werden nämlich, wie in Figur 1
angedeutet, beim Wickeln nicht vollständig umwickelt, sondern derart, daß ihre beiden Enden aus dem Bauteil 13 ragen.
Das in die Ausnehmung 71 geschobene eine Ende des Wickeldorns 72 ragt aus dem Anschlag 68 heraus.

Die Greifeinrichtung 67, die vorzugsweise als Spannfutter
ausgebildet und quer zur Hubbalkenfördereinrichtung hin-
und herbeweglich ist, erfaßt nun das ihr zugewandte, aus
dem Anschlag 68 ragende Ende des Wickeldorns 72 und zieht
ihn aus dem Bauteil 13 heraus, das vom Anschlag 68 gehalten wird (Figur 1).

In einer Bahn oberhalb der Bewegungsbahn der Greifeinrichtung 67 ist eine weitere nicht dargestellte Greifeinrichtung an einem Hubzylinder 73 angeordnet. Die Greifeinrichtung am Hubzylinder 73 erfaßt den mit der Greifeinrichtung 67 aus dem Bauteil 13 herausgezogenen Wickeldorn 72, worauf er mit dem Hubzylinder 73 nach oben und dann zu der Einrichtung 74 zum Rückstransport der Wickeldorne 72 zur Wickelmaschine 5 bewegt wird.

Die Wickeldorn-Rücktransporteinrichtung 74 ist als zweisträngiger, schrittweise angetriebener Kettenförderer ausgebildet. Sie verläuft parallel zur Ofentransporteinrichtung 14 und zum Hubbalkenförderer 51.

Die beiden Transportketten 75 und 76 des Kettenförderers sind um jeweils ein Umlenkradpaar 77, 78 und 79, 80 an dem der Wickeldorn-Auszieheinrichtung 66 benachbarten Ende und dem der Wickelmaschine 5 benachbarten Ende des Kettenförderers angeordnet. Die Umlenkradpaare 77, 78 sowie 79, 80 sind dabei beispielsweise durch Wellen drehfest miteinander verbunden, wobei die Drehachsen der Umlenkradpaare 77, 78 sowie 79, 80 horizontal und parallel zueinander verlaufen.

Jede Transportkette 75 und 76 der als Kettenförderer ausgebildeten Wickeldorn-Rücktransporteinrichtung 74 ist mit Aufnahmen 81 bzw. 82 versehen. Die Abstände der Aufnahmen 81 bzw. 82 in Transportrichtung entsprechen dem Weg , den der Kettenförderer je Takt durchführt.

In den Aufnahmen 81 und 82 werden die Wickeldorne 72 von der am Hauptzylinder 73 angeordneten Greifeinrichtung abgelegt.

An die Stelle, an der die an dem Hubzylinder 73 angeordnete Greifeinrichtung die Wickeldorne 72 ablegt, schließt sich in Förderrichtung eine Einrichtung 83 zum Reinigen der Wickeldorne, beispielsweise von ausgehärteten Bindemittelresten, an.

Bei der Reinigugnseinrichtung 83 kann es sich beispielsweise um umlaufende Bürsten handeln.

Der Reinigungseinrichtung 83 folgt eine Einrichtung 84 zum Auftragen eines Trennmittels auf die Wickeldorne 72. Das Trennmittel dient zum besseren Lösen der Wickeldorne 72 von den Bauteilen 13 mit der Wickeldorn-Auszieheinrichtung 66. Das Trennmittel kann ein Wachs oder ein wachsähnliches Produkt sein.

Zum Aufbringen des Trennmittels auf die Wickeldorne wird bevorzugt eine (nicht dargestellte) mit einer saugfähigen, weichen Oberfläche versehene Walze vorgesehen, der eine Trennmittel-Lösung zugeführt wird und die an den Wickeldornen 72 sich abrollt.

Der Trennmittel-Auftragseinrichtung 84 schließt sich dann eine Einrichtung 85 zum Absaugen des Lösungsmittels der Trennmittel-Lösung auf den Wickeldornen an.

Der Absaugeinrichtung 85 kann eine Einrichtung 86 zum Polieren der Wickeldorne 72 nachgeordnet sein. Die Poliereinrichtung 86 kann beispielsweise eine (nicht dargestellte) umlaufende Filzscheibe aufweisen.

Die Reinigungseinrichtung 83, die Trennmittel-Auftragseinrichtung 84, die Absaugeinrichtung 85 und die Poliereinrichtung 86 sind oberhalb der als Kettenförderer ausgebildeten Wickeldorn-Rücktransporteinrichtung 74 angeordnet. Zur Bewegung der Wickeldorne von den Aufnahmen 81 und 82 der Transportketten 75 und 76 des Kettenförderers zu den Einrichtungen 83 bis 86 ist jeweils ein Das heißt, die Greifeinrichtungen 94 und 95 sind mit den Wickeldornen 72 um eine waagrechte, sich in Längsrichtung des Laufkatzenträgers 16 erstreckende Achse von der der Wippe 89 zugewandten Seite zu der der Wickelmaschine 5 zugewandten Seite des Laufkatzenträgers 16 verschwenkbar und zum Positionieren der Wickeldorne 72 zwischen den Arbeitsspindeln 8 und den Spannspindeln 9 der Wickelmaschine ausgebildet.

Die Wippe 89 ist um eine horizontale quer zum Kettenförderer 74 verlaufende Achse aus demselben heraus verschwenkbar. Sie weist Aufnahmen für so viele Wickeldorne auf, wie die Greifeinrichtungen 94 und 95 der Laufkatze gleichzeitig aufnehmen können, also beispielsweise Aufnahmen für drei Wickeldorne 72. Das heißt, die Anzahl der Aufnahmen der Wippe 89 ist der Anzahl der Bauteile 13, 13' und 13" angepaßt, die von der Wickelmaschine 5 gleichzeitig gewickelt werden können.

Nach dem Herausziehen der Wickeldorne 72 aus den Bauteilen 13 können letztere mit dem Hubbalkenförderer 51 noch weiteren Nachbearbeitungseinrichtungen zugeführt werden, beispielsweise der Nachbearbeitungseinrichtung 96. Die Nachbearbeitungseinrichtung 96 weist ein Fräswerkzeug auf, mit dem Schlitze und andere Ausnehmungen in das Bauteil gefräst werden können. Handelt es sich bei dem herzustellenden Bauteil beispielsweise um eine Lenksäule, so kann mit dem Fräswerkzeug ein Längsschlitz in die Lenksäule gefräst werden, der zur Aufnahme des Sperrbolzens des Lenkradschlosses dient.

Die Bewegung der Bauteile zu der oberhalb des Hubbalkenförderers 51 angeordneten Einrichtung 96 erfolgt wiederum mit einem Hubtisch 97, der entsprechend dem vorstehend näher erläuterten Hubtisch 64 der Schleifeinrichtung 62 ausgebildet ist und Aufnahmen 98 aufweist.

(nicht dargestellter) Hubtisch mit Aufnahmen für die Wickeldorne vorgesehen, wobei die Hubtische dem vorstehend näher erläuterten Hubtisch 64 an der Schleifeinrichtung 62 des Hubbalkenförderers 51 entsprechen und zwischen den Transportketten 75 und 76 angeordnet sein können.

An die Wickeldorn-Rücktransporteinrichtung 74 schließt sich eine Einrichtung 88 zur Übergabe der Wickeldorne 72 von der Wickeldorn-Rücktransporteinrichtung 74 zu der Wickelmaschine 5 an.

Die Übergabeeinrichtung 88 umfaßt eine Wippe 89 mit Aufnahmen 90 und 91 für die Wickeldorne 72, sowie Greifeinrichtungen 94 und 95, die an einem Gestell 92 angeordnet sind, das an der Laufkatze 93 angelenkt ist.

Die Laufkatze 93 ist an einem Laufkatzenträger, beispielsweise dem Laufkatzenträger 16 verfahrbar und zwar von der Wippe 89 zur Wickelmaschine 5. Der Laufkatzenträger erstreckt sich also von der dem Fadenauge 12 der Wickelmaschine gegenüberliegenden Seite der Wickelmaschine 5 zur Wippe 89, wobei letztere auf der der Wickelmaschine 5 gegenüberliegenden Seite des Laufkatzenträgers 16 angeordnet ist. Im übrigen ist die Ausbildung und die Anordnung der Greifeinrichtungen 94 und 95 an der Laufkatze 93 die Gleiche, wie vorstehend im Zusammenhang mit den Greifeinrichtungen 94 und 95 und der Laufkatze 17 der Einrichtung 15 zur Übergabe der Bauteile von der Wickelmaschine 5 zur Ofentransporteinrichtung 15 beschrieben. Es sind lediglich die Aufnahmen der Greifeinrichtungen 94 und dem Durchmesser der Wickeldorne 72 angepaßt.

MBB

Patentabteilung

0151238

Die so hergestellten Bauteile werden dann von dem Hubbalkenförderer 51 an einen Transportbehälter 99 abgegeben.

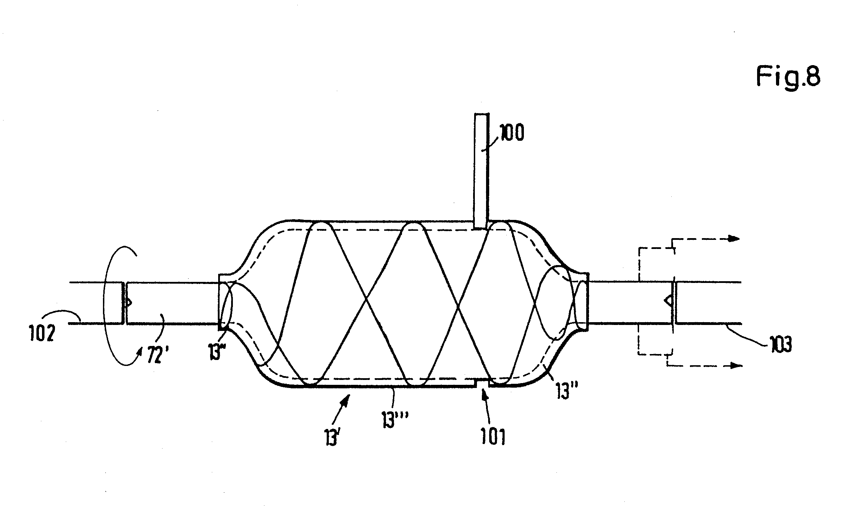

Zur Herstellung eines Bauteils mit einem Halsabschnitt und einem Hauptabschnitt großen Innendurchmessers wird das Bauteil 13' gemäß Figur 8 gewickelt, dessen Endabschnitte 13'' einen geringen und dessen mittlerer Hauptabschnitt 13''' einen großen Innendurchmesser aufweist. Der Dorn 72' besteht entsprechend aus zwei Endabschnitten mit geringem und einem mittleren Hauptabschnitt mit großem Außendurchmesser.

Das Bauteil 13' wird nach dem Aushärten im Ofen 35 der Bearbeitungsstation 62 zugeführt. Diese weist gemäß Figur 8 eine Trennscheibe 100 auf, so daß bei rotierendem Bauteil 13' dasselbe an der Stelle 101 durchtrennt wird.

Alsdann wird, wie in Figur 8 gestrichelt dargestellt ist, mit der Greifeinrichtung 67 der Dornauszieheinrichtung 66 der Dorn 72' mit dem Wickelreststück zwischen Trennstelle 101 und Greifeinrichtung 67 aus dem Bauteil 13' entfernt, wobei letzteres durch einen Anschlag an der Trennstelle 101 fixiert wird.

Sämtliche Transporteinrichtungen der Anlage, also Wickeldorneinspanneinrichtung 8, 9 der Wickelmaschine, die Übergabeeinrichtung 15, die Ofentransporteinrichtung 14, die Wickeldornspanneinrichtung 30, 31, der Hubbalkenförderer, die Wippe 60, die Wickeldorn-Auszieheinrichtung 66, der Hubzylinder 73, die Wickeldorn-Rücktransporteinrichtung 74, die Übergabeeinrichtung 88, einschließlich der Wippe 89 sowie die Hubzylinder 64, 69, 97 usw. laufen synchron und nach dem gleichen Takt.

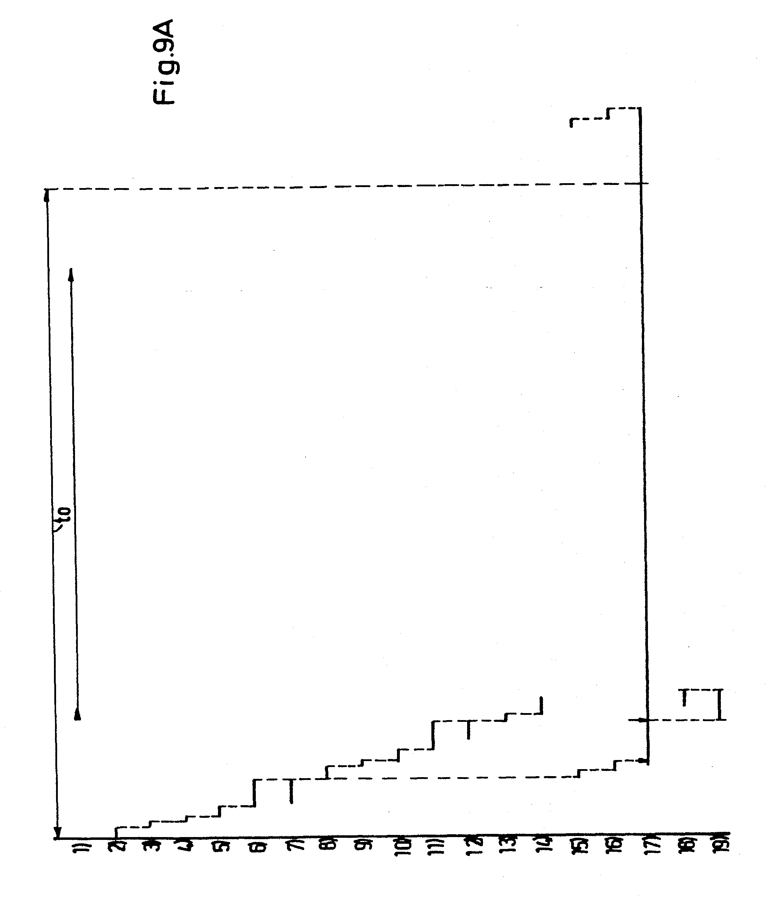

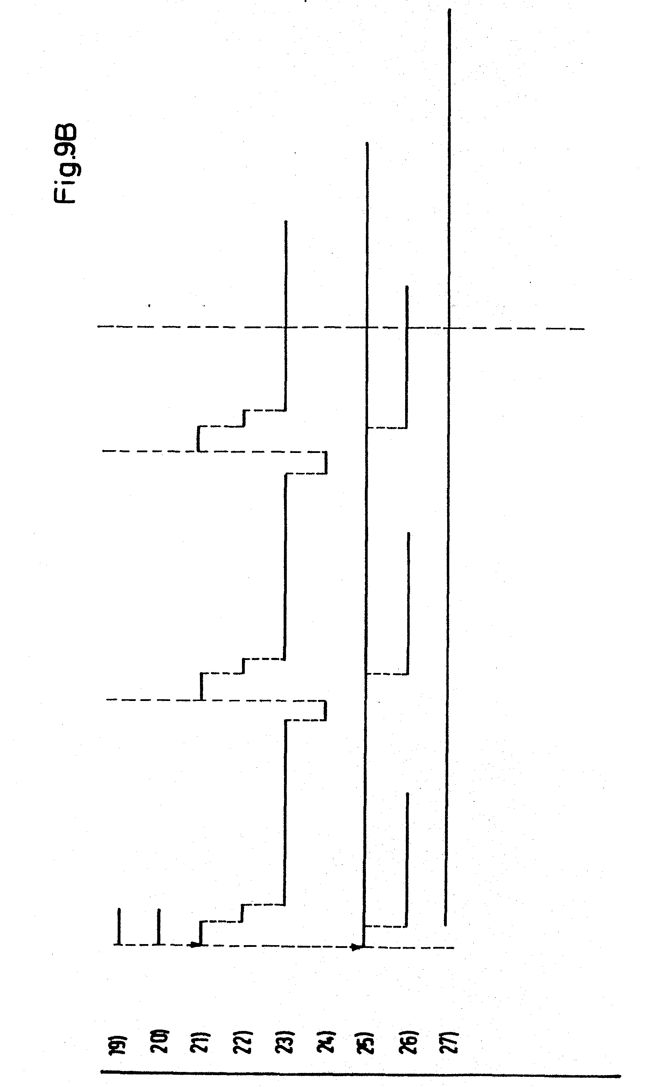

Figur 9A und B stellt den Taktplan der Anlage dar. Die Anlage taktet dabei folgendermaßen:

1) Wickelvorgang der Wickelmaschine (5);

2) das Gestell 18 wird in Anlage an die Bauteile 13, 13' und 13'' in der Wickelmaschine 5 verschwenkt, deren Wickeldorne 72 in je einem Arbeits/Spannspindel-Paar 8 und 9 eingespannt sind;

3) die Riegel 23 des Gestells 18 werden geschlossen;

4) die Spannspindeln 9 der Wickelmaschine 5 werden geöffnet;

5) das Gestell 18 und die damit verriegelten Bauteile 13, 13' und 13'' werden aus der Wickelmaschine 5 heraus verschwenkt;

6) die Laufkatze 17 wird entlang dem Laufkatzenträger 16 vor die Ofentransporteinrichtung 14 gefahren;

7) die Laufkatze 93 wird mit von der Wickeldorn-Rücktransporteinrichtung 74 übergebenen Wickeldornen 72 in den Greifeinrichtungen 94 und 95 entlang dem Laufkatzenträger 16 vor die Wickelmaschine 5 gefahren und die Greifeinrichtungen 94 und 95 werden in die Wickelmaschine 5 verschwenkt;

8) die Wickeldorne 72 werden mit den Spannspindeln 9 in der Wickelmaschine 5 eingespannt;

9) die Verriegelungen der Greifeinrichtungen 94 und 95 werden geöffnet;

10) die Greifeinrichtungen 94 und 95 werden aus der Wikkelmaschine 5 heraus verschwenkt;

11) die Laufkatze 93 wird entlang dem Laufkatzenträger
16 vor die Wickeldorn-Rücktransporteinrichtung 74
gefahren;

12) die Greifeinrichtungen 94 und 95 werden in die in
Figur 1 gezeigte Position zur Aufnahme von der Wickeldorn-Rücktransporteinrichtung 74 zu übergebenden
Wickeldornen 72 verschenkt;

13) die Greifeinrichtungen 94 und 95 werden nach Aufnahme
der Wickeldorne 72 verriegelt;

14) das Gestell 18 mit den Bauteilen 13, 13' und 13''
wird in die in Figur 3 dargestellte Position vor
der Ofentransporteinrichtung 14 verschwenkt;

15) das Gestell 18 wird von der in Figur 3 dargestellten
Position auf die Transportketten 24 und 25 zu bewegt
und damit die Wickeldorne 73 der Bauteile 13, 13' und
13'' in die Aufnahmen 26 und 27 gelegt ;

16) die Riegel 23 des Gestells 18 werden geöffnet,

17) die Transportketten 24 und 25 des Kettenförderers der Ofentransporteinrichtung 14 werden um eine Teilung gefahren, um die Dorne 72 mit den Bauteilen 13, 13' und 13'' aus dem Gestell 18 zu heben;

18) das Gestell 18 wird in die in Figur 3 dargestellte Position zurück gefahren;

19) das Gestell 18 wird aus der, in Figur 3 dargestellten Position in die in Figur 2 dargestellte Winkelposition verschwenkt;

20) die Laufkatze 17 wird zur Wickelmaschine 5 zurückgefahren;

21) Takt der Wippe 60 und Takt des Hubblakenförderers 51;

22) Anheben der Wickeldorne 72 der Bauteile 13 mit dem Hubtisch 64, Einspannen des Wickeldorns 72 in die Nachbearbeitungseinrichtung (z. B. Schleifmaschine 62);

23) Nachbearbeiten in der Nachbearbeitungseinrichtung;

24) Entspannen der Wickeldorne 72 der Bauteile 13;

25) Wickeldorn-Rücktransporteinrichtung 74;

26) Anheben der Wickeldorne 72 mit den Bauteilen 13 mit dem Hubtisch 69 und Herausziehen der Wickeldorne 72 aus den Bauteilen 13 mit der Wickeldornauszieheinrichtung 66; und

27) Transport der Wickeldorne 72 mit der Greifeinrichtung von der Auszieheinrichtung 66 zur Wickeldornrücktransporteinrichtung 74.

Wie daraus ersichtlich, beträgt der Takt 23) ein Drittel von $t_0$, da die drei Wickeldorne 13, 13' und 13'' mit der Wickelmaschine 5 gleichzeitig gewickelt werden.

Der Wickelmaschine 5, der Übergabeeinrichtung 15, der Ofentransporteinrichtung 14, dem Hubbalkenförderer 51, der Wickeldornauszieheinrichtung 66 und der Wickeldornrücktransporteinrichtung 74 ist jeweils eine eigene abgeschlossene Steuereinheit $S_1$, $S_2$, $S_3$, $S_4$, $S_5$ und $S_6$ zugeordnet.

Die Steuereinheiten $S_1$ bis $S_6$ sind seriell verknüpft und durch Signalaustausch miteinander verkettet. D. h. die Steuereinheit $S_n$ gibt an die Steuereinheit $S_{n+1}$ das Signal, daß der Vorgang bei der Einrichtung, dem die Steuereinheit $S_n$ zugeordnet ist, abgeschlossen, also das Bauteil 13 bzw. der Dorn 72 abholbereit ist, worauf die Steuereinheit $S_{n+1}$ an die Steuereinheit $S_n$ eine Rückmeldung abgibt, nämlich daß die Einrichtung, der die Steuereinheit $S_{n+1}$ zugeordnet ist, das Bauteil 13 bzw. den Dorn 72 abgeholt hat.

Der Vorteil dieser Steuerung liegt insbesondere in ihrer Einfachheit sowie darin, daß bei Störungen des Betriebsablaufs einer dieser Einrichtungen für ein Zwischenlager weitergefertigt werden kann.

Anlage zur Herstellung rohrförmiger Bauteile aus faserverstärktem Kunststoff

Patentansprüche

1. Anlage zur Herstellung rohrförmiger Bauteile aus faserverstärktem Kuntstoff, mit einer Einrichtung, mit der
Faserstränge mit einem wärmehärtbaren Bindemittel getränkt werden, mit mindestens einem in eine Wickelmaschine einspannbaren Wickeldorn, auf den die getränkten Faserstränge abgelegt werden, wobei die Wickelmaschine eine parallel zu dem Dorn hin- und herbewegliche
Führungseinrichtung für den aufzuwickelnden Faserstrang aufweist, eine Transporteinrichtung, mit der die
gewickelten Bauteile durch einen Härteofen,zu einer
Einrichtung zum Herausziehen der Wickeldorne aus den
gehärten Bauteilen und zu wenigstens einer Nachbearbeitungsstation befördert werden und mit der die leeren
Wickeldorne wieder über eine Dornvorbereitungsstation
zur Wickelstation zurücktransportiert werden, dadurch
gekennzeichnet, daß die Nachbearbeitungsstation (62)
zwischen dem Härteofen (35) und der Dornauszieheinrichtung (66) vorgesehen ist.

2. Anlage nach Anspruch 1, dadurch gekennzeichnet, daß die
gewickelten Bauteile (13) der Nachbearbeitungsstation
(62) und der Dornauszieheinrichtung (66) von der Transporteinrichtung mittels Positioniereinrichtungen zuge-

0151238

führt werden.

3. Anlage nach Anspruch 2, dadurch gekennzeichnet, daß die Transporteinrichtung zur Aufnahme der Bauteile (13) an ihren Enden zweisträngig ausgebildet ist, und die Positioniereinrichtungen durch zwischen den beiden Strängen der Transporteinrichtung angeordnete Hubtische (64, 69) gebildet sind.

4. Anlage nach einem der Ansprüche 1 bis 3, dadurch gekennzeichnet, daß die Nachbearbeitungseinrichtung durch eine Einrichtung (62) zum Schleifen der Außenumfangs-Fläche der Bauteile (13) gebildet wird.

5. Anlage nach einem der Ansprüche 1 bis 3, dadurch gekennzeichnet, daß die Nachbearbeitungseinrichtung durch eine Schneid- oder Fräseinrichtung (100) gebildet wird.

6. Anlage nach einem der vorstehenden Ansprüche, dadurch gekennzeichnet, daß die Bauteile (13) in der Nachbearbeitungseinrichtung zwischen einer Arbeits- und einer Spannspindel (102,103) eingespannt sind.

7. Anlage nach einem der vorstehenden Ansprüche, dadurch gekennzeichnet, daß die Dornauszieheinrichtung (66) eine an einem Ende der Wickeldorne (72) angreifende in Wickeldornlängsrichtung hin- und herbewegliche Greifeinrichtung (67) sowie einen Anschlag (68) für das Bauteil (13) beim Herausziehen des Wickeldornes (72) mit der Greifeinrichtung (67) aufweist.

8. Anlage nach Anspruch 7, dadurch gekennzeichnet, daß der Anschlag (68) eine nach unten offene schlitzförmige Ausnehmung (71) mit einer Breite aufweist, die größer als der Durchmesser des Wickeldornes (72) und

*MBB*

Patentabteilung

kleiner als der Durchmesser des Bauteils (13) ist, und so gegenüber dem von der Positioniereinrichtung bzw. dem Hubtisch (69) zugeführten Bauteil (13) angeordnet ist, daß das aus dem Bauteil (13) ragende, nicht umwickelte Ende des Wickeldorns (72) bei Aufnahme in der Ausnehmung (71) aus dem Anschlag (68) zum Erfassen durch die Greifeinrichtung (67) herausragt.

9. Anlage nach Ansprüchen 7 oder 8, dadurch gekennzeichnet, daß die Greifeinrichtung (67) ein Spannfutter aufweist.

10. Anlage nach einem der vorstehenden Ansprüche, dadurch gekennzeichnet, daß eine weitere Nachbearbeitungseinrichtung (96) nach der Dornauszieheinrichtung (66) zum Fräsen von Ausnehmungen in das Bauteil (13) vorgesehen ist.

11. Anlage nach einem der vorstehenden Ansprüche, dadurch gekennzeichnet, daß jeder Wickeldorn (72) in der Wickelmaschine (5) zwischen einer Arbeitsspindel (8) und einer axial verschiebbaren Spannspindel (9) einspannbar ist.

12. Anlage nach einem der vorstehenden Ansprüche, dadurch gekennzeichnet, daß die Einrichtung (15) zur Übergabe der gewickelten Bauteile (13) von der Wickelmaschine (5) an die Einrichtung (14) zum Transport der Bauteile (13) durch den Härteofen (35) vorgesehen ist, für jedes Bauteil (13) eine Greifeinrichtung (19, 20) aufweist.

13. Anlage nach Anspruch 12, dadurch gekennzeichnet, daß die Greifeinrichtung (19, 20) an einer Laufkatze (17) angeordnet sind.

14. Anlage nach einem der vorstehenden Ansprüche, dadurch gekennzeichnet, daß die Einrichtung (14) zum Transport der gewickelten Bauteile (13) durch den Härteofen (35) mit einer Einrichtung versehen ist, durch die die Bauteile (13) in Umdrehung versetzt werden.

15. Anlage nach einem der vorstehenden Ansprüche, dadurch gekennzeichnet, daß die Einrichtung (14) zum Transport der gewickelten Bauteile (13) durch den Ofen (35) durch einen zweisträngigen, schrittweise angetriebenen Kettenförderer gebildet wird.

16. Anlage nach Anspruch 15, dadurch gekennzeichnet, daß an den beiden Transportketten (24, 25) des Kettenförderers sich gegenüberliegende Aufnahmen (26, 27) vorgesehen sind, wobei die Abstände der Aufnahmen (26, 27) dem Weg entsprechen, den der Kettenförderer je Schritt durchführt.

17. Anlage nach einem der Ansprüche 14 bis 16, dadurch gekennzeichnet, daß die Einrichtung, mit der die Bauteile (13) in Umdrehung versetzt werden, jeweils aus einer Antriebsspindel (30), die an der einen Transportkette (24) gelagert ist, und einer der Antriebsspindel (30) gegenüber an der anderen Transportkette (25) gelagerten axial verschiebbaren Spannspindel (31) besteht, wobei die Antriebsspindel (30) und die Spannspindel (31) jeweils an einer Aufnahme (26, 27) angeordnet sind.

18. Anlage nach Anspruch 17, dadurch gekennzeichnet, daß jede Antriebsspindel (30) durch ein zur Spindelachse koaxiales, auf der Außenseite der Transportkette (24) angeordnetes Ritzel (34) angetrieben wird, das in einer parallel zu der Transportkette (24) verlaufenden Kette (33) kämmt.

19. Anlage nach Anspruch 17 oder 18, dadurch gekennzeichnet, daß jede Spannspindel (31) auf die zugehörige Antriebsspindel (30) zu belastet ist und an der Stelle, an der die gewickelten Bauteile (13) von der Übergabeeinrichtung an die Aufnahmen (26, 27) des Kettenförderers abgegeben werden, eine Einrichtung vorgesehen ist, die zum Einspannen die Spannungsspindel (31) entgegen ihrer Belastung bewegt.

20. Anlage nach einem der vorstehenden Ansprüche, dadurch geekennzeichnet, daß die Umlenkräder der Umlenkradpaare (42 bis 47), die von der einen Transportkette (24) des Kettenförderers umschlungen werden, in einem Gestell (50) gelagert sind, das gegenüber den anderen Umlenkrädern der Umlenkradpaare (42 bis 47) in Richtung der Drehachsen der Umlenkradpaare (42 bis 47) verschiebbar ist.

21. Anlage nach einem der vorstehenden Ansprüche, dadurch gekennzeichnet, daß die Laufkatze (17) an einem Laufkatzenträger (16) verfahrbar ist, der sich von der der Faserstrang-Führungseinrichtung gegenüberliegenden Seite der Wickelmaschine (5) zu der Einrichtung (14) zum Transport der gewickelten Bauteile (13) durch den Ofen (35) erstreckt, wobei die Einrichtung (14) zum Transport der gewickelten Bauteile (13) durch den Ofen (35) auf der der Wickelmaschine (5) gegenüberliegenden Seite des Laufkatzenträgers (16) angeordnet ist.

22. Anlage nach Anspruch 20, dadurch gekennzeichnet, daß die Greifeinrichtung (19, 20) mit dem gewickelten Bauteil (13) um eine waagrechte Achse von der der Wickelmaschine (5) zugewandten Seite zu der der Wickelmaschine (5) abgewandten Seite des Laufkatzenträgers (16) schwenkbar und zum Ablegen der gewickelten Bauteile (13) wobei der Kontakt durch Bauteilberührung wirksam wird.

28. Anlage nach einem der vorstehenden Ansprüche, dadurch geeknnzeichnet, daß an der Stelle, an die Bauteile (13) aus den Aufnahmen (26, 27) des Kettenförderers genommen werden, eine Einrichtung vorgesehen ist, die zur Freigabe der Bauteile (13) die Spannspindel (31) entgegen ihrer Belastung bewegt.

29. Anlage nach einem der vorstehenden Ansprüche, dadurch gekennzeichnet, daß die Einrichtung (74) zum Rücktransport der Wickeldorne (72) zur Wickelmaschine (5) einen zweisträngigen, schrittweise angetriebenen Kettenförderer (75, 76) umfaßt.

30. Anlage nach Anspruch 29, dadurch gekennzeichnet, daß die Transportketten (75, 76) des Kettenförderers Aufnahmen (81, 82) für die Wickeldorne (72) aufweisen, wobei die Abstände zwischen den Aufnahmen (81, 82) in Transportrichtung dem Weg entsprechen, den der Kettenförderer je Schritt durchführt.

31. Anlage nach einem der vorstehenden Ansprüche, dadurch gekennzeichnet, daß eine Greifeinrichtung vorgesehen ist, die die mit der Wickeldorn-Auszieheinrichtung (66) aus den Bauteilen (13) entfernten Wickeldorne (72) erfaßt und zum Kettenförderer (75, 76) zum Rücktransport der Wickeldorne (72) transportiert.

32. Anlage nach einem der vorstehenden Ansprüche, dadurch gekennzeichnet, daß eine Einrichtung (88) zur Übergabe der Wickeldorne (72) von der Wickeldorn-Rücktransporteinrichtung (74) an die Wickelmaschine (5) vorgesehen ist, die eine Wippe (89) umfaßt, die die Wickeldorne (72) aus den Aufnahmen (81, 82) der Transportketten

*MBB*

Patentabteilung

in den Aufnahmen (26, 27) der Einrichtung (14) zum Transport der gewickelten Bauteile (13) durch den Härteofen (35) ausgebildet sind.

23. Anlage nach einem der vorstehenden Ansprüche, dadurch gekennzeichnet, daß sich an den Kettenförderer zum Transport der gewickelten Bauteile (13) durch den Härteofen (35) ein Hubbalkenförderer (51) anschließt.

24. Anlage nach Anspruch 23, dadurch gekennzeichnet, daß der Hubbalkenförderer (51) zwei außen liegende stationäre Balken (52, 53) und zwei innen liegende Hubbalken (54, 55) aufweist.

25. Anlage nach Anspruch 23 oder 24, dadurch gekennzeichnet, daß die stationären Balken (52, 53) und die Hubbalken (54, 55) jeweils Aufnahmen (56, 57 bzw. 58, 59) für die gehärteten Bauteile (13) aufweisen, wobei der Abstand der Aufnahmen (56, 57 bzw. 58, 59) in Förderrichtung jeweils der Vorwärtsbewegung der Hubbalken (54, 55) je Fördertakt entspricht.

26. Anlage nach einem der Ansprüche 19 bis 21, dadurch gekennzeichnet, daß zur Übergabe der gehärteten Bauteile (13) von dem Kettenförderer auf den Hubbalkenförderer (51) eine Wippe (60) vorgesehen ist, die die Bauteile (13) aus den Aufnahmen (26, 27) des Kettenförderers hebt und in die benachbarten Aufnahmen (56, 57) der stationären Balken (52, 53) des Hubbalkenförderers (51) ablegt.

27. Anlage nach Anspruch 26, dadurch gekennzeichnet, daß die Wippe (60) durch einen Kontakt betätigt wird, der an dem Kettenförderer unmittelbar an der Stelle angeordnet ist, an der die Wippe (60) die Bauteile (13) aus den Aufnahmen (26, 27) des Kettenförderers hebt, (75, 76) des Kettenförderers hebt.

33. Anlage nach Anspruch 32, dadurch gekennzeichnet, daß die Einrichtung (88) zur Übergabe der Wickeldorne (72) von der Wickeldorn-Transporteinrichtung (74) an die Wickelmaschine (5) weiterhin eine Greifeinrichtung (94, 95) umfaßt, die die von der Wippe (89) ausgehobenen Wickeldorne (72) umfaßt.

34. Anlage nach Anspruch 33, dadurch gekennzeichnet, daß die Greifeinrichtungen (94, 95) an einer Laufkatze (93) angeordnet sind.

35. Anlage nach einem der Ansprüche 32 bis 34, dadurch gekennzeichnet, daß die Laufkatze (93) an einem Laufkatzenträger (16) verfahrbar ist, der sich von der Wippe (89) zu der der Fadenführungseinrichtung (12) abgewandten Seite der Wickelmaschine (5) erstreckt, wobei die Wippe (89) auf der der Wickelmaschine (5) gegenüberliegenden Seite des Laufkatzenträgers (16) angeordnet ist.

36. Anlage nach einem der Ansprüche 33 bis 35, dadurch gekennzeichnet, daß die Greifeinrichtung (94, 95) mit dem Wickeldorn (72) um eine waagrechte Achse von der von der Wippe (89) zugewandten Seite zu der der Wickelmaschine (5) zugewandten Seite des Laufkatzenträgers (16) verschwenkbar und zum Positionieren des Wickeldorns zwischen der Arbeitsspindel (8) und der Spannspindel (9) der Wickelmaschine (5) ausgebildet ist.

37. Anlage nach einem der vorstehenden Ansprüche, dadurch gekennzeichnet, daß der Wickelmaschine (5), der Übergabeeinrichtung (15), der Ofentransporteinrichtung (14), dem Hubbalkenförderer (51), der Wickeldornausziehein-

0151238

richtung (66) und der Wickeldornrücktransporteinrichtung (74) jeweils eine Steuereinheit zugeordnet ist,
wobei die Steuereinheiten seriell durch Signalaustausch
miteinander verknüpft sind.

FIG. 1

0151238

9478

0151238

FIG. 2

FIG. 3

9478

FIG. 4

FIG. 5

FIG. 6

36 { 37 {

38 {

47

40

44

45

46

41

35

24

39

43

29

13

13'

13"

42

50

96

66

68

71

63

62

56

52

13

98

97

70

69

54

65

64

58

FIG. 7

47

13

61

60

4/7

0151238

Fig.8

0151238

Fig.9A

Fig.9B